# EUROPEAN PATENT APPLICATION

(11) **EP 4 760 127 A1**
(43) Date of publication of application: **17.06.2026**
(21) Application number: 24850350.0
(22) Date of filing: 25.06.2024
(51) Int. Cl.: F16H 57/028, F16H 1/06, H02K 7/116

(54) **UNIT**

(30) Priority: 08.08.2023 JP 2023129103
(71) Applicant: Jatco Ltd., Shizuoka 417-8585 (JP)
(72) Inventor: KAMIYAMA, Akira, Fuji-shi, Shizuoka 417-8585 (JP); UEHARA, Hiroki, Fuji-shi, Shizuoka 417-8585 (JP)
(74) Representative: Hoefer & Partner Patentanwälte mbB
(86) International application number: PCT/JP2024/022955
(87) International publication number: WO 2025/033000

(57) **Abstract**

[Problems] To suppress both the deflection of the shaft during high-speed rotation and the vibration of the shaft when the applied load on the gear is large.

[Solutions] A unit has: a rotating electric machine; a shaft connected at the downstream side of a rotor of the rotating electric machine; a gear connected at the downstream side of the shaft; a first bearing provided so as to be capable of supporting the shaft; a second bearing provided so as to be capable of supporting the shaft; and the damping and restricting member provided so as to be capable of supporting the shaft. In a radial direction view, the rotating electric machine is positioned between the first bearing and the second bearing. In the radial direction view, the second bearing is positioned between the gear and the rotating electric machine. In the radial direction view, the gear is positioned between the second bearing and the damping and restricting member. The damping and restricting member is set such that the allowable movement amount of the shaft in the radial direction at a corresponding support position is larger than allowable movement amounts of the first bearing and the second bearing.

## Description

### TECHNICAL FIELD

The present invention relates to a unit.

### BACKGROUND ART

Patent Document 1 and Patent Document 2 disclose a structure in which a motor shaft is supported at two locations by bearings.

### PRIOR ART DOCUMENT

### PATENT DOCUMENT

Patent Document 1: JP 2017-88117 A
Patent Document 2: WO 2019/208642 A1

### SUMMARY OF INVENTION

### PROBLEM TO BE SOLVED BY THE INVENTION

When a shaft is supported at both ends by bearings, if a shaft support span (the distance between bearings) is long, there is a risk in that a deflection amount of the shaft becomes large during high-speed rotation. On the other hand, if the shaft support span is shortened and a gear that rotates integrally with the shaft is overhung outside the region between two bearings, there is a risk in that the shaft is tilted when an applied load on the gear is large, and vibration is caused.

The present invention has been made in view of such a problem, and an object thereof is to suppress both the deflection of the shaft during high-speed rotation and the vibration of the shaft when an applied load on the gear is large.

### MEANS FOR SOLVING THE PROBLEM

A unit according to an aspect of the present invention has: a rotating electric machine; a shaft connected at the downstream side of a rotor of the rotating electric machine; a gear connected at the downstream side of the shaft; a first bearing provided so as to be capable of supporting the shaft; a second bearing provided so as to be capable of supporting the shaft; and a damping and restricting member provided so as to be capable of supporting the shaft. In a radial direction view, the rotating electric machine is positioned between the first bearing and the second bearing. In the radial direction view, the second bearing is positioned between the gear and the rotating electric machine. In the radial direction view, the gear is positioned between the second bearing and the damping and restricting member. The damping and restricting member is set such that the allowable movement amount of the shaft in the radial direction at a corresponding support position is larger than allowable movement amounts of the first bearing and the second bearing.

### EFFECT OF THE INVENTION

According to this aspect, in light of the fact that the shorter the shaft support span is, the smaller the deflection amount that occurs when the shaft is rotated at high speed becomes, the second bearing is arranged on the rotating electric machine side with respect to the gear. With such a configuration, compared with a case in which the rotating electric machine, the gear, and the second bearing are arranged in this order, the shaft support span of the first bearing and the second bearing can be shortened, and the deflection of the shaft during high-speed rotation can be suppressed. On the other hand, when the second bearing is arranged on the rotating electric machine side with respect to the gear, there is a concern that the shaft is tilted with the second bearing as a fulcrum when the applied load on the gear becomes large, and the vibration amount of the shaft becomes large. In contrast, the damping and restricting member is set such that the allowable movement amount of the shaft in the radial direction at the corresponding support position is larger than the allowable movement amounts of the first bearing and the second bearing. Therefore, when the applied load on the gear becomes large and the shaft is about to be tilted, the tilting of the shaft can be suppressed and the tilt amount thereof can be reduced by the damping and restricting member. As a result, the vibration of the shaft when the applied load on the gear is large can also be suppressed.

### BRIEF DESCRIPTION OF DRAWINGS

[FIG. 1] FIG. 1 is a schematic configuration diagram of a unit according to this embodiment.
[FIG. 2] FIG. 2 is a diagram of the unit viewed from a speed reduction mechanism side in a state in which a second cover is removed.
[FIG. 3] FIG. 3 is a diagram of a peripheral portion of an end portion of a rotation shaft viewed along the axial direction.
[FIG. 4] FIG. 4 is a diagram showing a first modification of a damping and restricting member.
[FIG. 5] FIG. 5 is a diagram showing a second modification of the damping and restricting member.

### DESCRIPTION OF EMBODIMENTS

An embodiment of the present invention will be described below with reference to the attached drawings.

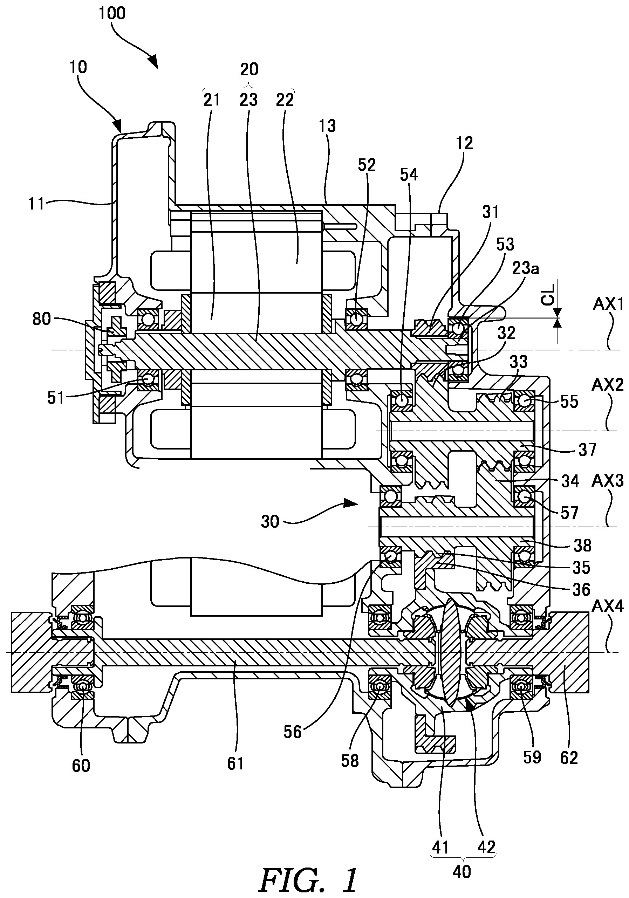

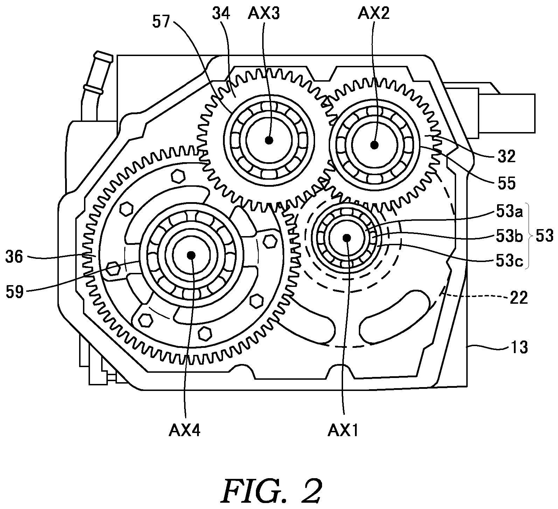

FIG. 1 is a schematic configuration diagram of a unit 100 according to this embodiment. FIG. 2 is a diagram of the unit 100 viewed from a speed reduction mechanism 30 side in a state in which a second cover 12 is removed. FIG. 1 is a developed sectional view in which the unit 100 is developed such that a first axis AX1, a second axis AX2, a third axis AX3, and a fourth axis AX4 of the unit 100 are included in the same plane. The up-down direction in FIG. 2 corresponds to the gravitational direction.

Regarding a term "unit", the unit can also be referred to as, for example, a motor unit (a unit including at least a motor) or a motive force transmission device (a device including at least a motive force transmission mechanism). The motor is a rotating electric machine having an electric motor function and/or a generator function (at least one of the electric motor function and the generator function). The motive force transmission mechanism is, for example, a gear mechanism and/or a differential gear mechanism. The device (unit) including the motor and the motive force transmission mechanism is included in both concepts of a motor unit and a motive force transmission device.

As shown in FIG. 1, the unit 100 includes a housing 10, a rotating electric machine 20, a speed reduction mechanism 30, and a differential gear 40. The unit 100 is mounted on a vehicle. The vehicle is an electric vehicle having the rotating electric machine 20 as a drive source. The housing 10 includes a first cover 11, a second cover 12, and a case 13. The rotating electric machine 20, the speed reduction mechanism 30, and the differential gear 40 are housed in the housing 10. The first cover 11 closes an opening of the cylindrical case 13 from the first side in the axial direction (the left side in FIG. 1), and the second cover 12 closes an opening of the case 13 from the second side in the axial direction. The rotating electric machine 20 is housed in the case 13, and the differential gear 40 is housed in the second cover 12.

The rotating electric machine 20 includes a rotor 21, a stator 22, and a rotation shaft 23. The rotor 21 is provided on an outer circumference (the outer circumferential side) of the rotation shaft 23. The stator 22 is provided in the case 13 and houses the rotor 21. The rotation shaft 23 is a shaft and projects out from the rotor 21 on both sides in the axial direction. The rotation shaft 23 is connected at the downstream side of the rotor 21. The rotation shaft 23 is connected at the downstream side of the rotor 21 by projecting out from the rotor 21 toward the downstream side. The downstream side is the motive force output side, and the rotation shaft 23 projects toward the downstream side by projecting out from the rotor 21 toward the second side in the axial direction. The upstream side is the motive force input side. Connection may be connection via other configurations (for example, a clutch or another gear mechanism). The rotation shaft 23 is connected at the downstream side of the rotor 21 so as to be capable of transmitting the motive force, and is rotated integrally with the rotor 21.

The rotation shaft 23 penetrates through the first cover 11 on the first side in the axial direction and penetrates through the case 13 on the second side in the axial direction. A bearing 51 serving as a first bearing is provided in the first cover 11 at a portion where the rotation shaft 23 penetrates, and a bearing 52 serving as a second bearing is provided in the case 13 at a portion where the rotation shaft 23 penetrates. The rotation shaft 23 is supported by the bearing 51 and the bearing 52. A resolver 80 is provided on the rotation shaft 23 at a portion projecting out from the first cover 11. The resolver 80 detects rotation of the rotating electric machine 20.

The bearing 51 is provided in the first cover 11 serving as a bearing holding member that holds the bearing 51, in a state in which so-called play is provided in the radial direction. Similarly, the bearing 52 is provided in the case 13 serving as a bearing holding member that holds the bearing 52, in a state in which the play is provided in the radial direction. The bearing 51 and the bearing 52 support the rotation shaft 23 in the vicinity of both end sides of the rotor 21 in the extending direction of the rotation shaft 23.

The speed reduction mechanism 30 is a gear mechanism, and includes a first gear 31, a second gear 32, a third gear 33, a fourth gear 34, a fifth gear 35, a sixth gear 36, a shaft 37, and a shaft 38. The first gear 31 is arranged on the first axis AX1 together with the rotating electric machine 20. In other words, the rotating electric machine 20 and the first gear 31 are arranged coaxially with respect to the first axis AX1. That is, a plurality of elements (parts, portions, etc.) being arranged on an Nth axis (N is a natural number) is synonymous with the plurality of elements being arranged coaxially with respect to the Nth axis. Similarly, the second gear 32 and the third gear 33 are arranged on the second axis AX2, and the fourth gear 34 and the fifth gear 35 are arranged on the third axis AX3. The sixth gear 36 and the differential gear 40 are arranged on the fourth axis.

The first axis AX1, the second axis AX2, the third axis AX3, and the fourth axis AX4 all constitute axes of the unit 100 and extend along the same direction. Therefore, the extending directions of the first axis AX1, the second axis AX2, the third axis AX3, and the fourth axis AX4 all correspond to the axial direction of the unit 100. In other words, the axial direction means the axial direction of a rotation shaft of the components (for example, the motor, the gear mechanism, or the differential gear mechanism) constituting the unit. The radial direction of the unit 100 is the direction orthogonal to any one of the first axis AX1, the second axis AX2, the third axis AX3, and the fourth axis AX4. The first axis AX1 constitutes the axis line of the rotation shaft 23, the second axis AX2 constitutes the axis line of the shaft 37, the third axis AX3 constitutes the axis line of the shaft 38, and the fourth axis AX4 constitutes the axis line of the differential gear 40.

The first gear 31 is connected at the downstream side of the rotation shaft 23. The first gear 31 is connected at the downstream side of the rotation shaft 23 by being provided on the rotation shaft 23 on the second side in the axial direction with respect to the rotor 21. The first gear 31 is connected at the downstream side of the rotation shaft 23 so as to be capable of transmitting motive force. The first gear 31 is provided on the rotation shaft 23 at a portion projecting out from the case 13. The first gear 31 is provided on the rotation shaft 23 in a state in which it is overhung outside (outside on the second side in the axial direction) a region between the bearing 51 and the bearing 52. The first gear 31 is integrated with the rotation shaft 23 by being press-fitted into the rotation shaft 23, and rotates integrally with the rotation shaft 23. The first gear 31 may be connected to the rotation shaft 23 by, for example, spline engagement. The same applies to the second gear 32 and the like.

The rotation shaft 23 extends to the second side in the axial direction with respect to the first gear 31. The rotation shaft 23 is supported by a bearing 53 serving as a third bearing at the portion that is extended in the second side in the axial direction with respect to the first gear 31. The bearing 53 supports an end portion 23a of the rotation shaft 23 on the second side in the axial direction. The bearing 53 is provided in the second cover 12 serving as the bearing holding member that holds the bearing 53, in a state in which the play is provided in the radial direction. The bearing 53 is provided adjacent to the first gear 31 from the second side in the axial direction.

The second gear 32 meshes with the first gear 31. The second gear 32 is set to have more teeth than the first gear 31, and constitutes a first speed reduction gear stage together with the first gear 31. The second gear 32 is provided on the shaft 37 and is arranged on the second axis AX2. The second gear 32 is integrally formed with the shaft 37. The shaft 37 extends along the rotation shaft 23. The shaft 37 is supported by a bearing 54 provided in the case 13 and a bearing 55 provided in the second cover 12. The bearing 54 and the bearing 55 are arranged at both ends with respect to the shaft 37.

The third gear 33 is connected at the downstream side of the second gear 32. The third gear 33 is provided on the shaft 37 and is arranged on the second axis AX2. The third gear 33 is provided on a portion of the shaft 37 that is extending in the direction away from the rotating electric machine 20 from the second gear 32, in other words, to the second side in the axial direction. The third gear 33 is integrally formed with the shaft 37. The second gear 32 and the third gear 33 are arranged between the bearing 54 and the bearing 55 in the axial direction.

The fourth gear 34 meshes with the third gear 33. The fourth gear 34 is set to have more teeth than the third gear 33, and constitutes a second speed reduction gear stage together with the third gear 33. The fourth gear 34 is provided on the shaft 38 and is arranged on the third axis AX3. The fourth gear 34 is integrally formed with the shaft 38. The shaft 38 extends along the rotation shaft 23. The shaft 38 is supported by a bearing 56 provided in the case 13 and a bearing 57 provided in the second cover 12. The bearing 56 and the bearing 57 are arranged at both ends with respect to the shaft 38.

The fifth gear 35 is connected at the downstream side of the fourth gear 34. The fifth gear 35 is provided on the shaft 38 and is arranged on the third axis AX3. The fifth gear 35 is provided on a portion of the shaft 38 that is extending in the direction approaching the rotating electric machine 20 from the fourth gear 34, in other words, to the first side in the axial direction. Therefore, in the shaft 38, the motive force transmission direction is reversed to the opposite side in the axial direction with respect to the shaft 37. The fifth gear 35 is integrally formed with the shaft 38. The fourth gear 34 and the fifth gear 35 are arranged between the bearing 56 and the bearing 57 in the axial direction.

The sixth gear 36 meshes with the fifth gear 35. The sixth gear 36 is a final gear and is provided in the differential gear 40. The sixth gear 36 is arranged on the fourth axis AX4 together with the differential gear 40. The motive force from the rotating electric machine 20 is transmitted from the sixth gear 36 to the differential gear 40. Therefore, the differential gear 40 is connected at the downstream side of the sixth gear 36.

In the radial direction view, the sixth gear 36 overlaps with the first gear 31. In other words, the first gear 31 has a portion that overlaps with the sixth gear 36 in the radial direction view. This portion overlaps with the sixth gear 36 in, for example, the radial direction view along a plane including the first axis AX1 and the fourth axis AX4. Overlapping in a predetermined direction view including the radial direction view and the axial direction view means overlapping in the predetermined direction, and means that a plurality of elements are arranged in the predetermined direction. Accordingly, when it is illustrated in the drawings that the plurality of elements are arranged in the predetermined direction, it may be considered that there is a sentence in the specification explaining that the plurality of elements overlap in the predetermined direction view.

The sixth gear 36 is set to have more teeth than the fifth gear 35, and constitutes a third speed reduction gear stage together with the fifth gear 35. Therefore, in the speed reduction mechanism 30, three-stage speed reduction is performed by the first gear 31 and the second gear 32, the third gear 33 and the fourth gear 34, and the fifth gear 35 and the sixth gear 36.

The differential gear 40 is a differential gear mechanism and includes a differential case 41 and a differential portion 42. The differential case 41 is supported by a bearing 58 provided in the case 13 and a bearing 59 provided in the second cover 12, and rotates integrally with the sixth gear 36. The sixth gear 36 is coaxially fixed to an outer wall portion of the differential case 41, and the differential case 41 houses the differential portion 42. The differential portion 42 distributes and outputs the motive force that is input to the differential case 41 via the sixth gear 36 to each of the drive wheels in the vehicle on the left and right sides.

The differential gear 40 projects in a direction away from the stator 22 from the sixth gear 36. The differential gear 40 projects as such with a portion projecting further in axial direction from the sixth gear 36 as a projecting portion. Therefore, in other words, the differential gear 40 projects further in the direction away from the stator 22 rather than in the direction approaching the stator 22 with respect to the sixth gear 36, and the differential gear 40 is arranged on the side away from the stator 22 with respect to the sixth gear 36.

A first drive shaft 61 is assembled to the differential portion 42 from the first side in the axial direction, and a second drive shaft 62 is assembled to the differential portion 42 from the second side in the axial direction. The motive force from the rotating electric machine 20 is transmitted from the differential portion 42 to the one of the drive wheels via the first drive shaft 61 and to the other of the drive wheels via the second drive shaft 62. The first drive shaft 61 is longer than the second drive shaft 62, and with such a configuration, it is possible to increase the distance between the drive wheel and the differential gear 40, thereby suppressing the bending angle. The first drive shaft 61 is supported by a bearing 60 provided in the first cover 11.

The sixth gear 36 can also be regarded as a part of the differential gear 40. In other words, the sixth gear 36 can also be regarded as one component of the differential gear 40. Even in this case, it can be understood that the differential gear 40 is connected at the downstream side of the sixth gear 36, in a form in which a portion of the differential gear 40 including the differential portion 42 that outputs the motive force from the rotating electric machine 20 is connected at the downstream side of the sixth gear 36.

As shown in FIG. 2, the first axis AX1 and the fourth axis AX4 are arranged on the lower side of the second axis AX2 and the third axis AX3 in the axial direction view. The upper side and the lower side refer to a vertical positional relationship in the gravitational direction in a predetermined direction view including the axial direction view and the radial direction view, and respectively include "above" and "below".

"Above" and "below" mean, for example, an arrangement that appears to overlap with the gravitational direction in a predetermined direction view including the axial direction view and the radial direction view. For example, when a first element overlaps with a second element in the gravitational direction in the axial direction view, if the position of the first element is higher than the position of the second element, the first element is positioned above the second element. In this case, the first element and the second element may be overlapped or may be offset in the radial direction view.

With respect to "above" and "below", "the upper side" and "the lower side" further include a positional relationship of being diagonally above and diagonally below in a predetermined direction view including the axial direction view and the radial direction view. Therefore, for example, when the first element is positioned diagonally above the second element in a state in which the first element does not overlap with the second element in the gravitational direction in the axial direction view, and when the first element and the second element do not overlap in the radial direction view, the first element is positioned on the upper side of the second element.

As a result of the arrangement described above, a layout, in which the first axis AX1 and the fourth axis AX4 are concentrated on the lower side in the unit 100 in the gravitational direction, is achieved. In addition, since the rotating electric machine 20 arranged on the first axis AX1 is arranged on the lower side in the gravitational direction, it is possible to provide a space above the rotating electric machine 20. The first axis AX1 is arranged on the upper side of the fourth axis AX4.

The bearing 53 has a metal inner race 53a, a rolling element 53b, and an outer race 53c, and when the bearing 53 supports the rotation shaft 23, the bearing 53 supports the rotation shaft 23 while being supported by the second cover 12 in a state in which the inner race 53a, the rolling element 53b, and the outer race 53c are in close contact with each other in the radial direction. The same applies to the bearing 51 provided in the first cover 11 and the bearing 52 provided in the case 13.

Returning to FIG. 1, the rotating electric machine 20 is positioned between the bearing 51 and the bearing 52 in the radial direction view. The bearing 52 is positioned between the first gear 31 and the rotating electric machine 20 in the radial direction view. The first gear 31 is positioned between the bearing 52 and the bearing 53 in the radial direction view.

The shorter the shaft support span is, the smaller the deflection amount that occurs when the rotation shaft 23 rotates at high speed becomes. In this regard, the bearing 52 is arranged on the rotating electric machine 20 side with respect to the first gear 31. With such a configuration, compared with a case in which the rotating electric machine 20, the first gear 31, and the bearing 52 are arranged in this order, the shaft support spans of the bearing 51 and the bearing 52 can be shortened, and so, the deflection of the rotation shaft 23 during high-speed rotation is suppressed.

On the other hand, when the bearing 52 is arranged on the rotating electric machine 20 side with respect to the first gear 31, there is a concern that the rotation shaft 23 is tilted with the bearing 52 as a fulcrum when an applied load on the first gear 31 becomes large, and a vibration amount of the rotation shaft 23 becomes large.

In contrast, the bearing 53 is set such that the allowable movement amount of the rotation shaft 23 in the radial direction at the corresponding support position is larger than those of the bearing 51 and the bearing 52. The allowable movement amount in the radial direction means a maximum value of a movement amount of a predetermined member in the radial direction, and the allowable movement amount of the rotation shaft 23 in the radial direction at the support position of the bearing 53 can be set by the allowable movement amount set for the bearing 53 in the radial direction. In addition, the allowable movement amount set for the bearing 53 in the radial direction can be set to be larger than the allowable movement amounts set for the bearing 51 and the bearing 52 in the radial direction by, for example, providing the bearing 53 in the second cover 12 with a looser fit than the bearing 51 provided in the first cover 11 and the bearing 52 provided in the case 13.

With such a configuration, when the applied load on the first gear 31 becomes large and the rotation shaft 23 is about to be tilted, the tilting of the rotation shaft 23 is suppressed by the bearing 53, and thus, a tilt amount of the rotation shaft 23 is reduced. As a result, the vibration of the rotation shaft 23 when the applied load on the first gear 31 is large is also suppressed.

In a state in which the rotation shaft 23 is supported by the bearing 51 and the bearing 52, the bearing 53 is in a state in which so-called play is provided. On the other hand, for example, when the rotation shaft 23 is always constrained by three components of the bearing 51, the bearing 52, and some support member, the vibration thereof can always be made small; however, if such a configuration is to be achieved, it is necessary to design such that dimensional accuracies of the components become very high. Thus, by employing the bearing 53 that is configured such that the allowable movement amount in the radial direction is larger than those of the bearing 51 and the bearing 52, it is also possible to reduce design difficulty.

The bearing 53 has the play in a state in which the rotation shaft 23 is supported by the bearing 51 and the bearing 52, and is in a state in which it cannot be said that the bearing 53 is supporting the rotation shaft 23. Therefore, it can be said that the bearing 53 is provided so as to be capable of supporting the rotation shaft 23. Also regarding the bearing 51 and the bearing 52, for example, because the allowable movement amount in the radial direction by loose fitting is set, when the rotation shaft 23 vibrates, the bearing 51 and the bearing 52 can be in a state in which it cannot be said that they are supporting the rotation shaft 23 according to the vibration, and thus, it can be said that they are provided so as to be capable of supporting the rotation shaft 23. In other words, being provided so as to be capable of supporting can be said to have a play (the allowable movement amount in the radial direction).

The rotation shaft 23 is constituted by a single member. When the rotation shaft 23 is a single member, the bearing 51, the bearing 52, and the bearing 53 that support the rotation shaft 23 can suppress both the deflection of the rotation shaft 23 during high-speed rotation and the vibration of the rotation shaft 23 when the applied load on the first gear 31 is large.

Regarding a shaft formed of a single member, for example, a shaft constituted of a plurality of shafts, which are spline engaged, cannot be regarded as an integral component from a viewpoint of vibration, because, for example, if there is a play in a spline-engaged portion, vibration may be absorbed by a play, and thus it is not a shaft formed of a single member. On the other hand, for example, even a shaft formed of a plurality of shafts, which are spline engaged, if the engagement is achieved sufficiently tightly, or even a shaft formed of a plurality of shafts, which are welded together, can be regarded as an integral component because there is no play between the plurality of shafts, and thus, it is a shaft formed of a single member.

The bearing 51, the bearing 52, and the bearing 53 each has a bearing clearance CL. Regarding the bearing 53, the bearing clearance CL includes a first bearing clearance which is the clearance in the radial direction between the second cover 12 and the bearing 53, second bearing clearances which are the clearance in the radial direction formed between the inner race 53a and the rolling element 53b of the bearing 53 and the clearance in the radial direction formed between the rolling element 53b and the outer race 53c of the bearing 53, and a third bearing clearance which is the clearance in the radial direction formed between the rotation shaft 23 and the inner race 53a of the bearing 53. The same applies to the bearing 51 and the bearing 52.

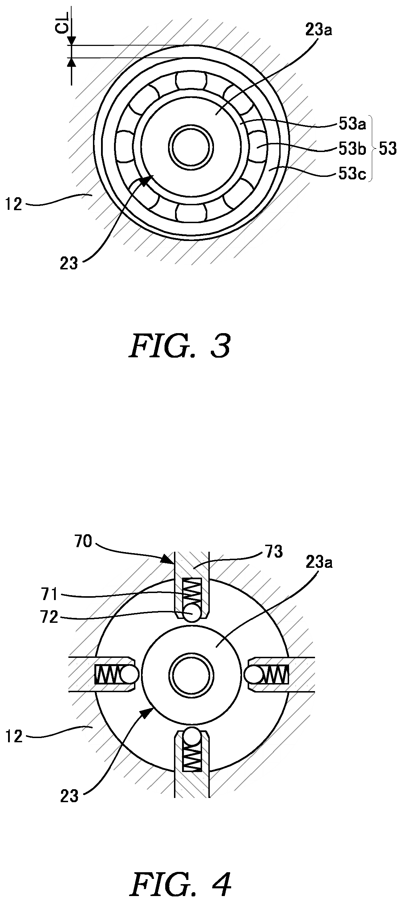

In FIGs. 1 and 3, the first bearing clearance between the second cover 12 and the bearing 53 is shown as the bearing clearance CL of the bearing 53. FIG. 3 is a diagram of a peripheral portion of the end portion 23a of the rotation shaft 23 viewed along the axial direction from the second side in the axial direction, and in FIG. 3, the bearing clearance CL is shown in a state in which the bearing 53 is deviated downward by tilting of the rotation shaft 23. In FIG. 3, a reference sign is given to a portion where the bearing clearance CL is most enlarged. Note that, in FIGs. 1 and 3, the bearing clearance CL is illustrated in an exaggerated manner for convenience of explanation. Such a bearing clearance CL can be provided by, for example, press-fitting and fixing the bearing 53 to the rotation shaft 23. Furthermore, if, for example, the bearing 53 is press-fitted and fixed to the second cover 12, the bearing clearance CL (the third bearing clearance) can also be provided between the rotation shaft 23 and the inner race 53a.

The bearing clearance CL of the bearing 53 is set so as to be larger than the bearing clearances CL for the bearing 51 and the bearing 52, and the allowable movement amount in the radial direction can be set by the bearing clearance CL. Therefore, if the bearing clearance CL of the bearing 53 is set as described above, it is possible to adjust the allowable movement amount in the radial direction by setting the bearing clearance CL. The bearing clearances CL for the bearing 51 and the bearing 52 may both be zero.

There is no correlation between the bearing clearance CL and a size of a diameter of a bearing, and for example, when the diameters of bearings are equal, the bearing clearance CL can be adjusted by adjusting a size of a rolling element or the like. In addition, for example, even when the diameters of bearings are different, the bearing clearance CL can be adjusted by adjusting a size of a rolling element or the like. Therefore, for example, it is possible to make the bearing clearance CL of a bearing having a smaller diameter larger than the bearing clearance CL of a bearing having a larger diameter, and vice versa.

The bearing 53 functions as a restricting member and corresponds to a damping and restricting member. Being a damping and restricting member includes at least one of: being a damping member that damps the corresponding rotation shaft 23 moving in the radial direction at the support position of the rotation shaft 23; and being a restricting member that restricts (limits) the movement of the corresponding rotation shaft 23 in the radial direction at the support position of the rotation shaft 23. The damping and restricting member may be both the damping member and the restricting member. While the bearing 53 has the play in a state in which the rotation shaft 23 is supported by the bearing 51 and the bearing 52, when the applied load on the first gear 31 becomes large and the rotation shaft 23 is about to be tilted, the bearing 53 restricts the movement of the rotation shaft 23 exceeding the allowable movement amount in the radial direction by interposing itself between the rotation shaft 23 and the second cover 12 in the radial direction, thereby suppressing the tilting of the rotation shaft 23, and thus, the bearing 53 functions as the restricting member.

The bearing 53, in which the inner race 53a, the rolling element 53b, and the outer race 53c that are brought into close contact with each other in the radial direction when a load is exerted are made of metal, undergoes elastic deformation within a range in which elastic deformation is allowed, and thus, the bearing 53 can also be said to be the damping member. With regard to the bearing 53, its function of restricting the movement is more significant than its function of damping through the elastic deformation of the metal. Therefore, in this embodiment, the bearing 53 is regarded as the restricting member. Instead of the bearing 53, for example, the following cushion devices 70 may also be used as the damping and restricting member.

FIG. 4 is a diagram showing a first modification of the damping and restricting member. FIG. 4 is a diagram of a peripheral portion of the end portion 23a of the rotation shaft 23 viewed along the axial direction from the second side in the axial direction. The cushion devices 70 each includes a cushion spring 71, which is an elastic body, a ball 72 that is biased by the cushion spring 71, and a body 73 that houses the cushion spring 71 and the ball 72. The body 73 may be constituted of a plurality of members.

The cushion devices 70 are provided in the second cover 12. Each of the cushion devices 70 is provided such that an expansion and compression direction of the cushion spring 71 is oriented along the radial direction of the rotation shaft 23 and the ball 72 faces an outer circumferential surface of the rotation shaft 23 so as to be spaced apart therefrom.

The body 73 has a bottomed cylindrical shape. The cushion spring 71 is provided between a bottom portion of the body 73 and the ball 72 inside the body 73. A tip end opening portion of the body 73 has the diameter smaller than the outer diameter of the ball 72, and the ball 72 partially projects out from the tip end opening portion in a state in which the ball 72 is biased by the cushion spring 71. The ball 72 faces the outer circumferential surface of the end portion 23a of the rotation shaft 23 so as to be spaced apart from the outer circumferential surface. Note that, in FIG. 4, a gap between the ball 72 and the rotation shaft 23 is exaggerated for convenience of explanation. A plurality of (four in this case) cushion devices 70 are provided at equally spaced intervals in a circumferential direction of the rotation shaft 23.

In this example, when the rotation shaft 23 is tilted with the bearing 52 as a fulcrum, the rotation shaft 23 comes into contact with the ball 72. Furthermore, when the rotation shaft 23 compresses the cushion spring 71 via the ball 72, the energy exerted by the rotation shaft 23 attempting to move in the radial direction is absorbed by the cushion spring 71. As a result, the cushion device 70 functions as the damping member, and the vibration is suppressed.

In a state in which the rotation shaft 23 is compressing the cushion spring 71, a state in which the rotation shaft 23 is being temporarily supported by the cushion devices 70 is achieved. Therefore, in this example, the cushion device 70 is configured such that a movement allowance of the rotation shaft 23 in the radial direction at a corresponding support position is set so as to be larger than those for the bearing 52 and the bearing 53. The movement allowance of the rotation shaft 23 in the radial direction at the support position of the cushion device 70 is, in other words, the movement allowance of the rotation shaft 23 (that is, the end portion 23a) in the radial direction at the portion supported by the cushion device 70. The movement allowance can be appropriately set by, in addition to an elastic force of the cushion spring 71, an arrangement of the cushion device 70 along the radial direction of the rotation shaft 23, a stroke amount (a projection amount) of the ball 72, and the like. In this example, the allowable movement amount in the radial direction can be adjusted by adjusting the elastic force of the cushion device 70 serving as an elastic force member (the elastic force of the cushion spring 71).

The cushion device 70 is the damping member and corresponds to the damping and restricting member. As the damping member, the elastic force member having the elastic force can be used. The elastic force member includes, for example, in addition to the member having the elastic force by being constituted of the elastic body itself such as a spring, a rubber, or the like, a member having the elastic force by including a portion that exhibits the elastic force by the elastic body like the cushion device 70, and a member having the elastic force by including a portion that exhibits the elastic force by a fluid (a gas, liquid) in a fluid pressure damper such as an air damper or an oil damper. The elastic force member is a member that undergoes, compared with a metal as the material, a larger displacement as a displacement for exhibiting the elastic force (the elastic displacement or stroke of the fluid pressure damper). Alternatively, an elastic force member is a member that undergoes a larger displacement than the bearing 53 as a displacement for exhibiting the elastic force. The same applies when compared with the bearing 51 and the bearing 52.

The cushion device 70 can also restrict the movement of the rotation shaft 23 in the radial direction by the elastic force exerted by the cushion spring 71, and thus, the cushion device 70 can also be said to be the restricting member. In this embodiment, since the cushion device 70 has the cushion spring 71 and thus has a configuration that at least performs the damping (the damping with a significant difference in the vibration suppression of the rotation shaft 23 compared with a metal as the material or the bearing 53), the cushion device 70 is regarded as the damping member.

Instead of the bearing 53 serving as the damping and restricting member, the following configuration may also be used.

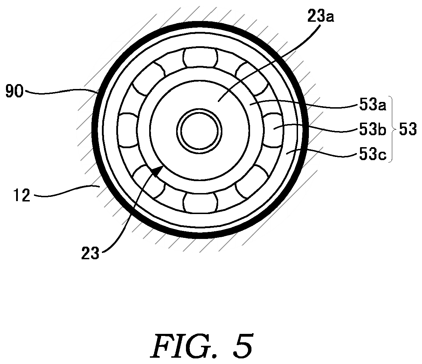

FIG. 5 is a diagram showing a second modification of the damping and restricting member. In FIG. 5, similarly to FIGs. 3 and 4, the peripheral portion of the end portion 23a of the rotation shaft 23 is shown. In this example, a rubber 90 is arranged on the outer circumference of the bearing 53 in the radial direction. The rubber 90 is provided in the second cover 12 so as to face an outer circumferential surface of the bearing 53 so as to be spaced apart therefrom. Note that, in FIG. 5, a gap between the rubber 90 and the outer circumferential surface of the bearing 53 is exaggerated for convenience of explanation. The rubber 90 is provided between the bearing 53 and the second cover 12 in the radial direction, and is provided annularly over an entire circumference around the bearing 53. A plurality of rubbers 90 may be arranged partially on the radial outer circumference of the bearing 53. In this case, the plurality of rubbers 90 can be arranged at equally spaced intervals along the circumferential direction of the bearing 53.

In this example, when the rotation shaft 23 is tilted with the bearing 52 as a fulcrum, the rotation shaft 23 comes into contact with the rubber 90. Furthermore, when the rotation shaft 23 compresses the rubber 90, the energy exerted by the rotation shaft 23 attempting to move in the radial direction is absorbed by the rubber 90. As a result, the rubber 90 functions as the damping member, and the vibration is suppressed.

In a state in which the rotation shaft 23 is compressing the rubber 90, a state in which the rotation shaft 23 is being temporarily supported by the rubber 90 via the bearing 53 is achieved. Therefore, in this example, the rubber 90 is configured such that the movement allowance of the rotation shaft 23 in the radial direction at a corresponding support position is set so as to be larger than those of the bearing 52 and the bearing 53. The movement allowance of the rotation shaft 23 in the radial direction at the support position of the rubber 90 is, in other words, the movement allowance of the rotation shaft 23 (that is, the end portion 23a) in the radial direction at the portion supported by the rubber 90. The movement allowance can be appropriately set by the elastic force exerted by the rubber 90, a thickness of the rubber 90, and the like.

The rubber 90 is the damping member, and in this example, the rubber 90 constitutes the damping and restricting member together with the bearing 53. With such a configuration, when, for example, the allowable movement amount in the radial direction is to be set in a range that cannot be covered by the adjustment of the bearing clearance CL of the bearing 53, it is possible to set the allowable movement amount in the radial direction in the range that cannot be covered by utilizing the elastic force of the rubber 90.

The rubber 90 can also restrict the movement of the rotation shaft 23 in the radial direction, and thus, the rubber 90 can also be said to be a restricting member. In this embodiment, since the rubber 90 is the elastic body and thus has a configuration that at least performs the damping (the damping with a significant difference in the vibration suppression of the rotation shaft 23 compared with a metal as the material or the bearing 53), the rubber 90 is regarded as the damping member.

Note that, in a case in which the bearing 53 and the rubber 90 constitute the damping and restricting member, the adjustment of the bearing clearance CL of the bearing 53 may or may not be performed. In other words, in this case, as long as a desired allowable movement amount in the radial direction is secured as a whole of the bearing 53 and the rubber 90 as the damping and restricting member, the adjustment of the bearing clearance CL of the bearing 53 does not necessarily need to be performed.

The rubber 90 may be provided on the outer circumferential surface of the bearing 53. In addition, the rubber 90 may be arranged on an inner circumference (the inner circumferential side) of the bearing 53 in the radial direction. In this case, the rubber 90 can be provided, for example, between the inner race 53a and the rolling element 53b of the bearing 53 or between the rolling element 53b and the outer race 53c in the radial direction. The rubber 90 may be an elastomer including the rubber 90, and an elastic body other than the elastomer may also be used instead of the rubber 90.

Next, main operational advantages of this embodiment will be described.
(1) The unit 100 has: the rotating electric machine 20; the rotation shaft 23 connected at the downstream side of the rotor 21 of the rotating electric machine 20; the first gear 31 connected at the downstream side of the rotation shaft 23; the bearing 51 provided so as to be capable of supporting the rotation shaft 23; the bearing 52 provided so as to be capable of supporting the rotation shaft 23; and the bearing 53 serving as the damping and restricting member provided so as to be capable of supporting the rotation shaft 23. In the radial direction view, the rotating electric machine 20 is positioned between the bearing 51 and the bearing 52. In the radial direction view, the bearing 52 is positioned between the first gear 31 and the rotating electric machine 20. In the radial direction view, the first gear 31 is positioned between the bearing 52 and the bearing 53. The bearing 53 is set such that the allowable movement amount of the rotation shaft 23 in the radial direction at the corresponding support position is larger than the allowable movement amounts of the bearing 51 and the bearing 52.
   According to such a configuration, the bearing 52 is arranged on the rotating electric machine 20 side with respect to the first gear 31. Therefore, compared with a case in which the rotating electric machine 20, the first gear 31, and the bearing 52 are arranged in this order, the shaft support span of the bearing 51 and the bearing 52 can be shortened, and thereby, the deflection of the rotation shaft 23 during high-speed rotation can be suppressed. In addition, the bearing 53 is set such that the allowable movement amount of the rotation shaft 23 in the radial direction at the corresponding support position is larger than the allowable movement amounts of the bearing 51 and the bearing 52. Therefore, when the applied load on the first gear 31 becomes large and the rotation shaft 23 is about to be tilted, the tilting of the rotation shaft 23 can be suppressed by the bearing 53, and a tilt amount thereof can be reduced. As a result, the vibration of the rotation shaft 23 when the applied load on the first gear 31 is large can also be suppressed.
(2) The unit 100 has the bearing 53 serving as the damping and restricting member, such that the damping and restricting member is configured to include the bearing 53. The bearing clearance CL of the bearing 53 is set so as to be larger than the bearing clearances CL of the bearing 51 and the bearing 52. According to such a configuration, the allowable movement amount in the radial direction can be adjusted by setting the bearing clearance CL of the bearing 53.
(3) The cushion device 70 may be provided instead of the bearing 53 serving as the damping and restricting member, and the unit 100 may be configured such that the damping and restricting member includes the cushion device 70, which is the elastic force member having the elastic force. According to such a configuration, the allowable movement amount in the radial direction can be adjusted by adjusting the elastic force of the cushion device 70.
(4) The bearing 53 and the rubber 90 may be provided instead of the bearing 53 serving as the damping and restricting member, and the unit 100 may be configured such that the damping and restricting member includes the bearing 53 and the rubber 90, which is the elastic force member having the elastic force. In this case, the rubber 90 serving as the elastic force member is arranged on the inner circumference in the radial direction or the outer circumference in the radial direction of the bearing 53.
   According to such a configuration, when the allowable movement amount in the radial direction is to be set in a range that cannot be covered by the adjustment of the bearing clearance CL of the bearing 53, it is possible to set the allowable movement amount in the radial direction in the range that cannot be covered by utilizing the elastic force of the rubber 90.
(5) The unit 100 has: the rotating electric machine 20; the rotation shaft 23 connected at the downstream side of the rotor 21 of the rotating electric machine 20; the first gear 31 connected at the downstream side of the rotation shaft 23; the bearing 51 provided so as to be capable of supporting the rotation shaft 23; the bearing 52 provided so as to be capable of supporting the rotation shaft 23; and the bearing 53 provided so as to be capable of supporting the rotation shaft 23. In the radial direction view, the rotating electric machine 20 is positioned between the bearing 51 and the bearing 52. In the radial direction view, the bearing 52 is positioned between the first gear 31 and the rotating electric machine 20. In the radial direction view, the first gear 31 is positioned between the bearing 52 and the bearing 53. The bearing clearance CL of the bearing 53 is set so as to be larger than the bearing clearances CL of the bearing 51 and the bearing 52.
   According to such a configuration, the bearing 52 is arranged on the rotating electric machine 20 side with respect to the first gear 31. Therefore, compared with a case where the rotating electric machine 20, the first gear 31, and the bearing 52 are arranged in this order, the shaft support span of the bearing 51 and the bearing 52 can be shortened, and the deflection of the rotation shaft 23 during high-speed rotation can be suppressed. In addition, the bearing clearance CL of the bearing 53 is set so as to be larger than the bearing clearances CL of the bearing 51 and the bearing 52. Therefore, when the applied load on the first gear 31 becomes large and the rotation shaft 23 is about to be tilted, the tilting of the rotation shaft 23 can be suppressed and the tilt amount thereof can be reduced by the bearing 53. As a result, the vibration of the rotation shaft 23 when the applied load on the first gear 31 is large can also be suppressed.
(6) The unit 100 has: the rotating electric machine 20; the rotation shaft 23 connected at the downstream side of the rotor 21 of the rotating electric machine 20; the first gear 31 connected at the downstream side of the rotation shaft 23; the bearing 51 provided so as to be capable of supporting the rotation shaft 23; the bearing 52 provided so as to be capable of supporting the rotation shaft 23; and the bearing 53 provided so as to be capable of supporting the rotation shaft 23. In the radial direction view, the rotating electric machine 20 is positioned between the bearing 51 and the bearing 52. In the radial direction view, the bearing 52 is positioned between the first gear 31 and the rotating electric machine 20. In the radial direction view, the first gear 31 is positioned between the bearing 52 and the bearing 53. The rubber 90 serving as the elastic force member having the elastic force is arranged on the inner circumference in the radial direction or the outer circumference in the radial direction of the bearing 53.

According to such a configuration, the bearing 52 is arranged on the rotating electric machine 20 side with respect to the first gear 31. Therefore, compared with a case where the rotating electric machine 20, the first gear 31, and the bearing 52 are arranged in this order, the shaft support span of the bearing 51 and the bearing 52 can be shortened, and the deflection of the rotation shaft 23 during high-speed rotation can be suppressed. In addition, the rubber 90 is arranged on the inner circumference in the radial direction or the outer circumference in the radial direction of the bearing 53. Therefore, when the applied load on the first gear 31 becomes large and the rotation shaft 23 is about to be tilted, the tilting of the rotation shaft 23 can be suppressed and the tilt amount thereof can be reduced by the rubber 90 provided together with the bearing 53. As a result, the vibration of the rotation shaft 23 when the applied load on the first gear 31 is large can also be suppressed.

Although the embodiment of the present invention has been described above, the above embodiment is merely a part of application examples of the present invention, and is not intended to limit the technical scope of the present invention to the specific configurations of the above embodiment.

### DESCRIPTION OF REFERENCE SIGNS

20 rotating electric machine
21 rotor
23 rotation shaft (shaft)
31 first gear (gear)
51 bearing (first bearing)
52 bearing (second bearing)
53 bearing (damping and restricting member, restricting member, third bearing)
70 cushion device (damping and restricting member, damping member, elastic force member)
90 rubber (damping and restricting member, damping member, elastic force member)
100 unit

## Claims

1. A unit comprising:
a rotating electric machine;
a shaft connected at a downstream side of a rotor of the rotating electric machine;
a gear connected at a downstream side of the shaft;
a first bearing provided so as to be capable of supporting the shaft;
a second bearing provided so as to be capable of supporting the shaft; and
a damping and restricting member provided so as to be capable of supporting the shaft, wherein
in a radial direction view, the rotating electric machine is positioned between the first bearing and the second bearing,
in the radial direction view, the second bearing is positioned between the gear and the rotating electric machine,
in the radial direction view, the gear is positioned between the second bearing and the damping and restricting member, and
the damping and restricting member is set such that an allowable movement amount of the shaft in the radial direction at a corresponding support position is larger than allowable movement amounts of the first bearing and the second bearing.

2. The unit according to claim 1, wherein
the damping and restricting member includes a third bearing, and
a bearing clearance of the third bearing is set so as to be larger than bearing clearances of the first bearing and the second bearing.

3. The unit according to claim 1, wherein
the damping and restricting member includes an elastic force member having an elastic force.

4. The unit according to claim 1, wherein
the damping and restricting member includes a third bearing and an elastic force member having an elastic force, and
the elastic force member is arranged on an inner circumference in the radial direction or an outer circumference in the radial direction of the third bearing.

5. A unit comprising:
a rotating electric machine;
a shaft connected at a downstream side of a rotor of the rotating electric machine;
a gear connected at a downstream side of the shaft;
a first bearing provided so as to be capable of supporting the shaft;
a second bearing provided so as to be capable of supporting the shaft; and
a third bearing provided so as to be capable of supporting the shaft, wherein
in a radial direction view, the rotating electric machine is positioned between the first bearing and the second bearing,
in the radial direction view, the second bearing is positioned between the gear and the rotating electric machine,
in the radial direction view, the gear is positioned between the second bearing and the third bearing, and
a bearing clearance of the third bearing is set so as to be larger than bearing clearances of the first bearing and the second bearing.

6. A unit comprising:
a rotating electric machine;
a shaft connected at a downstream side of a rotor of the rotating electric machine;
a gear connected at a downstream side of the shaft;
a first bearing provided so as to be capable of supporting the shaft;
a second bearing provided so as to be capable of supporting the shaft; and
a third bearing provided so as to be capable of supporting the shaft, wherein
in a radial direction view, the rotating electric machine is positioned between the first bearing and the second bearing,
in the radial direction view, the second bearing is positioned between the gear and the rotating electric machine,
in the radial direction view, the gear is positioned between the second bearing and the third bearing, and
an elastic force member having an elastic force is arranged on an inner circumference in the radial direction or an outer circumference in the radial direction of the third bearing.
